# EUROPEAN PATENT APPLICATION

(11) **EP 4 592 776 A1**
(43) Date of publication of application: **30.07.2025**
(21) Application number: 25153148.9
(22) Date of filing: 21.01.2025
(51) Int. Cl.: G05B 19/042, H04L 9/40, G05B 19/418, G06F 8/38

(54) **SYSTEMS AND METHODS FOR EDGE COMPUTING AND CONNECTIVITY VIA HUMAN INTERFACE MODULE**

(30) Priority: 23.01.2024 US 202418419731
(71) Applicant: Rockwell Automation Technologies, Inc., Mayfield Heights, OH 44124 (US)
(72) Inventor: Mills, Jonathan A., Mayfield Heights, Ohio, 44124 (US); Wiese, Todd A., Mayfield Heights, Ohio, 44124 (US); Rustad, James S., Mayfield Heights, Ohio, 44124 (US)
(74) Representative: Grünecker Patent- und Rechtsanwälte PartG mbB

(57) **Abstract**

A human-interface module (HIM) for an industrial automation system includes processing circuitry, and a memory, accessible by the processing circuitry, the memory storing instructions that, when executed by the processing circuitry, cause the processing circuitry to perform operations including receiving instructions to control one or more industrial automation devices of the industrial automation system via a cloud-based computing system or a mobile computing device communicatively coupled to the HIM. The operations may also include generating one or more control signals based on the instructions, transmitting the one or more control signals to the one or more industrial automation devices via an Ethernet connection, receiving process data associated with the one or more industrial automation devices, and transmitting the process data to the mobile computing device.

## Description

### BACKGROUND

This disclosure generally relates to systems and methods for human interface modules (HMIs) for industrial automation systems. More particularly, embodiments of the present disclosure are directed toward enhancing the capabilities of HMIs for industrial automation systems.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light and not as admissions of prior art.

Industrial automation systems may include automation control and monitoring systems. The automation control and monitoring systems may monitor statuses and/or receive sensing data from a wide range of devices, such as valves, electric motors, various types of sensors, other suitable monitoring devices, or the like. In addition, one or more interface components, such as HIMs, may be used to display information to operators and/or receive inputs to change or adjust an operation of one or more components of the industrial automation system (e.g., such as adjusting operation of one or more actuators), to manage the industrial automation system, or the like. Typically, HIMs, have been equipped with sufficient computing resources for displaying information, and receiving inputs to adjust operation of the industrial automation system. However, as industrial automation systems connect to the cloud and/or utilize containers, HIMs increased capabilities are needed.

### SUMMARY

A summary of certain embodiments disclosed herein is set forth below. It should be understood that these aspects are presented merely to provide the reader with a brief summary of these certain embodiments and that these aspects are not intended to limit the scope of this present disclosure. Indeed, this present disclosure may encompass a variety of aspects that may not be set forth below.

In one embodiment, a human-interface module (HIM) for an industrial automation system includes processing circuitry; and a memory, accessible by the processing circuitry, the memory storing instructions that, when executed by the processing circuitry, cause the processing circuitry to perform operations including receiving instructions to control one or more industrial automation devices of the industrial automation system via a cloud-based computing system or a mobile computing device communicatively coupled to the HIM. The operations may also include generating one or more control signals based on the instructions, transmitting the one or more control signals to the one or more industrial automation devices via an Ethernet connection, receiving process data associated with the one or more industrial automation devices, and transmitting the process data to the mobile computing device.

In another embodiment, a method includes receiving, from a cloud-based computing system, via a human-interface module (HIM), instructions to control one or more industrial automation devices of a plurality of industrial automation devices of an industrial automation system. The method also includes generating, via the HIM, one or more control signals based on the instructions, transmitting the one or more control signals from the HIM to the one or more industrial automation devices via an Ethernet connection, and receiving, via the HIM, process data associated with the one or more industrial automation devices. Additionally, the method includes transmitting, via the HIM, the process data to the cloud-based computing system or a mobile computing device communicatively coupled to the HIM.

In yet another embodiment, an industrial automation system includes a plurality of industrial automation devices, an ethernet switch communicatively coupled to the plurality of industrial automation devices, and a human-interface module (HIM) communicatively coupled to the plurality of devices, via the ethernet switch. The HIM may receive instructions to control or monitor one or more industrial automation devices of the plurality of devices of the industrial automation system, generate one or more control signals based on the instructions, transmit the one or more control signals to the one or more industrial automation devices via the Ethernet switch, and receive, via the Ethernet switch, process data associated with the one or more industrial automation devices. The HIM may also transmit the process data to a cloud-based computing system communicatively coupled to the HIM, a mobile computing device communicatively coupled to the HIM, and/or a containerized application executing in a container running on a compute surface of the HIM.

### BRIEF DESCRIPTION OF THE DRAWINGS

These and other features, aspects, and advantages of the present disclosure may become better understood when the following detailed description is read with reference to the accompanying drawings in which like characters represent like parts throughout the drawings, wherein:
FIG. 1 is a block diagram of an industrial automation system, in accordance with an embodiment;
FIG. 2 illustrates a diagrammatical representation of an exemplary control and monitoring system including a human-machine interface (HIM) that may be employed in any suitable industrial automation system, in accordance with an embodiment;
FIG. 3 is a block diagram of communication pathways between a HIM, an ethernet switch, and drives of an industrial automation system, in accordance with an embodiment;
FIG. 4 is a block diagram of components of a HIM, in accordance with an embodiment;
FIG. 5 is a block diagram of drives and corresponding simulated drives of an industrial automation system, in accordance with an embodiment;
FIG. 6 is a block diagram of an example operational technology (OT) network operating in an OT environment, that coordinates with a container orchestration system, in accordance with an embodiment;
FIG. 7 is a flow chart of a method for allowing access between devices connected to a HIM of an industrial automation system, in accordance with an embodiment; and
FIG. 8 is a flow chart of a method for deploying containerized applications of an industrial automation system using a HIM, in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions are made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

As mentioned above, industrial automation systems may include automation control and monitoring systems that may monitor statuses and/or receive sensing data from a wide range of devices, such as valves, electric motors, various types of sensors, other suitable monitoring devices, or the like. These automation control and monitoring systems may include human-interface modules (HIMs) that may use the statuses and/or collected information to provide alerts to operators to change or adjust an operation of one or more components of the industrial automation system, to manage the industrial automation system, and the like. However, current HIMs may lack the capabilities necessary to integrate with the cloud and/or containers, such as the capability to execute containers on a local (e.g., on-premise) computing system or device. Additionally, current HIMs may not facilitate connectivity between an industrial automation system and other devices, may face security vulnerabilities when connected to other devices, or may insufficiently protect connected devices from such security vulnerabilities. Thus, a HIM with enhanced connectivity, transfer speeds, connectivity, and security may be desired.

Accordingly, as will be described in more detail below, the present disclosure is generally directed towards techniques for secure edge computing and connectivity via a HIM, which may also be described herein as a human-machine interface (HMI). In some embodiments, a HIM may be connected in parallel to multiple devices (e.g., drives) of an industrial automation system locally via an Ethernet connection. The Ethernet connection may allow enhanced transfer speeds between the HIM and the devices, improving real-time monitoring and control capabilities, and the HIM may manage and push firmware updates to the devices on the local network via the Ethernet connection. Additionally, the HIM may be equipped with sufficient computing resources to execute deployable containerized applications, including real-time data acquisition, analysis, maintenance, asset management, device attestation, and monitoring of/for the multiple device concurrently.

In some embodiments, the HIM may also implement digital twins of the devices. As used herein, the term "digital twin" may be understood to mean a digital representation of a device of an industrial automation system, and implementing a digital twin of the device may allow digital, real-time control and monitoring of the device via the digital representation of the device. Further, the HIM may provide device attestation using, for example, cryptographic keys, digital certificates, and secure boot processes to authenticate devices and/or firmware of the industrial automation system, allowing cloud-based computing systems to securely access the devices of the industrial automation system via the HIM. The HIM may also connect to a mobile computing device via Bluetooth, Near Field Communication (NFC), and the like, and may use the mobile computing device as a tether to access a cloud-based computing system. Additionally, once connected, the HIM may allow the mobile computing device to access devices of the industrial automation system, allowing an operator to control and monitor the devices remotely.

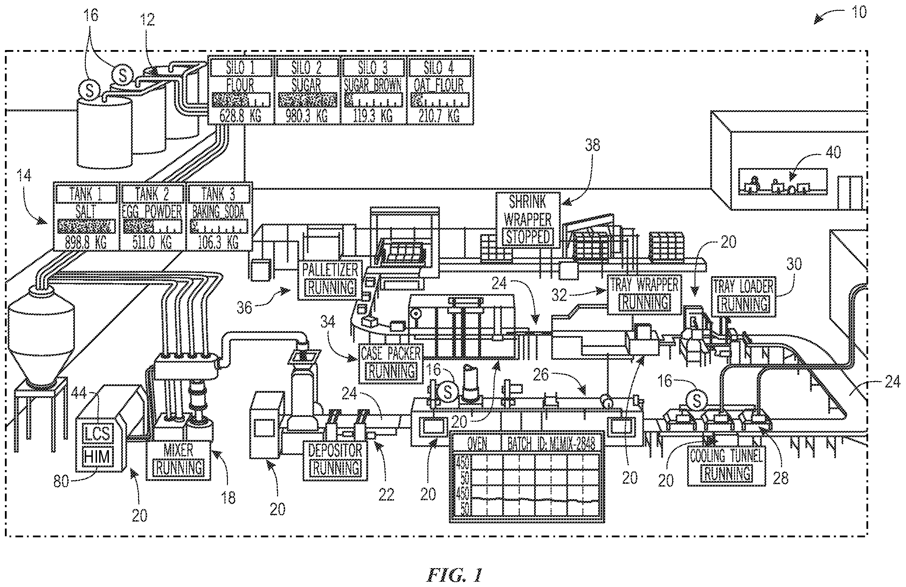

By way of introduction, FIG. 1 illustrates an example industrial automation system 10 employed by a food manufacturer. It should be noted that although the example industrial automation system 10 of FIG. 1 is directed at a food manufacturer, the present embodiments described herein may be employed within any suitable industry, such as automotive, mining, hydrocarbon production, manufacturing, and the like. The following brief description of the example industrial automation system 10 employed by the food manufacturer is provided herein to help facilitate a more comprehensive understanding of how the embodiments described herein may be applied to industrial devices to significantly improve the operations of the respective industrial automation system. As such, the embodiments described herein should not be limited to be applied to the example depicted in FIG. 1.

Referring now to FIG. 1, the example industrial automation system 10 for a food manufacturer may include silos 12 and tanks 14. The silos 12 and the tanks 14 may store different types of raw material, such as grains, salt, yeast, sweeteners, flavoring agents, coloring agents, vitamins, minerals, and preservatives. In some embodiments, sensors 16 may be positioned within or around the silos 12, the tanks 14, or other suitable locations within the industrial automation system 10 to measure certain properties, such as temperature, mass, volume, pressure, humidity, and the like.

The raw materials may be provided to a mixer 18, which may mix the raw materials together according to a specified ratio. The mixer 18 and other machines in the industrial automation system 10 may employ certain industrial automation devices 20 to control the operations of the mixer 18 and other machines. The industrial automation devices 20 may include controllers, input/output (I/O) modules, motor control centers, motors, human machine interfaces (HMIs), operator interfaces, contactors, starters, sensors 16, actuators, conveyors, drives, relays, protection devices, switchgear, compressors, sensor, actuator, human-interface module (HIM) 80, firewall, network switches (e.g., Ethernet switches, modular-managed, fixed-managed, service-router, industrial, unmanaged, etc.) and the like.

The mixer 18 may provide a mixed compound to a depositor 22, which may deposit a certain amount of the mixed compound onto conveyor 24. The depositor 22 may deposit the mixed compound on the conveyor 24 according to a shape and amount that may be specified to a control system for the depositor 22. The conveyor 24 may be any suitable conveyor system that transports items to various types of machinery across the industrial automation system 10. For example, the conveyor 24 may transport deposited material from the depositor 22 to an oven 26, which may bake the deposited material. The baked material may be transported to a cooling tunnel 28 to cool the baked material, such that the cooled material may be transported to a tray loader 30 via the conveyor 24. The tray loader 30 may include machinery that receives a certain amount of the cooled material for packaging. By way of example, the tray loader 30 may receive 25 ounces of the cooled material, which may correspond to an amount of cereal provided in a cereal box.

A tray wrapper 32 may receive a collected amount of cooled material from the tray loader 30 into a bag, which may be sealed. The tray wrapper 32 may receive the collected amount of cooled material in a bag and seal the bag using appropriate machinery. The conveyor 24 may transport the bagged material to case packer 34, which may package the bagged material into a box. The boxes may be transported to a palletizer 36, which may stack a certain number of boxes on a pallet that may be lifted using a forklift or the like. The stacked boxes may then be transported to a shrink wrapper 38, which may wrap the stacked boxes with shrink-wrap to keep the stacked boxes together while on the pallet. The shrink-wrapped boxes may then be transported to storage or the like via a forklift or other suitable transport vehicle.

To perform the operations of each of the devices in the example industrial automation system 10, the industrial automation devices 20 may be used to provide power to the machinery used to perform certain tasks, provide protection to the machinery from electrical surges, prevent injuries from occurring with human operators in the industrial automation system 10, monitor the operations of the respective device, communicate data regarding the respective device to a supervisory control system 40, and the like. In some embodiments, each industrial automation device 20 or a group of industrial automation devices 20 may be controlled using a local control system 42. The local control system 42 may include receive data regarding the operation of the respective industrial automation device 20, other industrial automation devices 20, user inputs, and other suitable inputs to control the operations of the respective industrial automation device(s) 20.

Additionally, the industrial automation devices 20 may also include the HIM 80 that may facilitate communications between the industrial automation devices 20, the local control system 42, mobile computing devices, and cloud-based computing systems, as described herein. The HIM 80 may be connected to the industrial automation devices 20 via an ethernet connection, and may locally manage and push firmware updates to connected devices via the ethernet connection. The HIM 80 may be capable of executing deployable containerized applications, including real-time data acquisition, analysis, maintenance, asset management, device attestation, and monitoring of/for the industrial automation devices 20 concurrently. Further, the HIM 80 may provde device attestation capabilites of/for the industrial automation devices 20, the local control system 42, mobile computing devices, and cloud-based computing systems using, for example, cryptographic keys, digital certificates, secure boot processes, and the like.

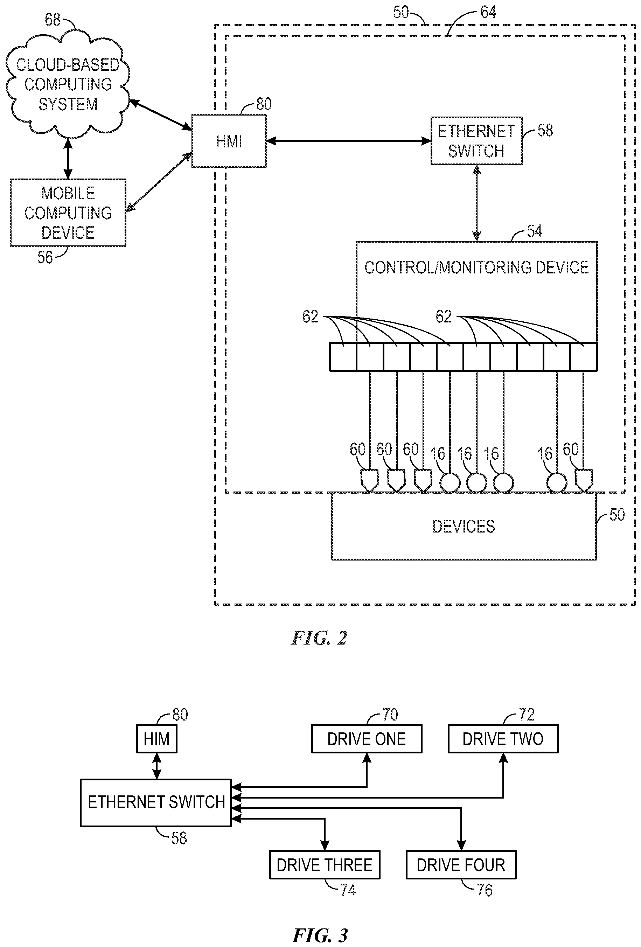

By way of example, FIG. 2 illustrates a diagrammatical representation of an exemplary control and monitoring system 50 that may be employed in any suitable industrial automation system 10, in accordance with embodiments presented herein. In FIG. 2, the control and monitoring system 50 is illustrated as including a HIM 80 and an Ethernet switch 58 adapted to interface with drives 54, which may monitor and/or control various types of devices 56, such as the mixer 18, the depositor 22, the conveyor 24, the oven 26, and the other pieces of machinery described in FIG. 1. In some embodiments, the devices may also be considered industrial automation equipment. By way of example, the devices 56 may include a variety of operational components, such as motors, contactors, starters, relays, protection devices, switchgear, compressors, valves, actuators, temperature elements, pressure sensors, mixers, machine conveyors, tanks, skids, specialized original equipment manufacturer machines, or a myriad of machinery or devices used for manufacturing, processing, material handling, and other applications. The devices 56 may also include, for example, electrical equipment, hydraulic equipment, compressed air equipment, steam equipment, mechanical tools, protective equipment, refrigeration equipment, power lines, hydraulic lines, steam lines, and the like.

It should be noted that the HIM 80 and the Ethernet switch 58, in accordance with embodiments of the present techniques, may be facilitated by the use of certain network strategies. Indeed, an industry standard network may be employed, such as Ethernet (e.g., EtherNet/IP) protocol, to enable rapid data transfer. Such networks permit the exchange of data in accordance with a predefined protocol, and may, in some cases, provide power for operation of networked elements.

As discussed above, the devices 56 may take many forms and include devices for accomplishing many different and varied purposes. For example, the devices 56 may include machinery used to perform various operations in a compressor station, an oil refinery, a batch operation for making food items, a mechanized assembly line, and so forth. Accordingly, the devices 56 may comprise a variety of operational components, such as electric motors, valves, actuators, temperature elements, pressure sensors, or a myriad of machinery or devices used for manufacturing, processing, material handling, and other applications.

Additionally, the devices 56 may include various types of equipment that may be used to perform the various operations that may be part of an industrial application. For instance, the devices 56 may include electrical equipment, hydraulic equipment, compressed air equipment, steam equipment, mechanical tools, protective equipment, refrigeration equipment, power lines, hydraulic lines, steam lines, and the like. Some example types of equipment may include mixers, machine conveyors, tanks, skids, specialized original equipment manufacturer machines, and the like. In addition to the equipment described above, the devices 56 may be made up of certain automation devices 20, which may include controllers, input/output (I/O) modules, motor control centers (MCCs), motors, operator interfaces, contactors, starters, sensors 16, actuators, drives, relays, protection devices, switchgear, compressors, firewall, network switches (e.g., Ethernet switches, modular-managed, fixed-managed, service-router, industrial, unmanaged, etc.) and the like. In certain embodiments, one or more properties of the devices 56 may be monitored and controlled by certain equipment for regulating control variables used to operate the devices 56.

In some cases, the devices 56 may be associated with devices used by other equipment. For instance, scanners, gauges, valves, flow meters, and the like may be disposed on devices 56. Here, the devices 56 may receive data from the associated devices and use the data to perform their respective operations more efficiently. For example, a controller (e.g., HIM 80) of a motor drive may receive data regarding a temperature of a connected motor and may adjust operations of the motor drive based on the data.

In certain embodiments, the devices (e.g., industrial automation equipment) 56 may include a communication component that enables the devices 56 to communicate data between each other and other devices. The communication component may include a network interface that may enable the devices 56 to communicate via various protocols such as EtherNet/IP^{®}, ControlNet^{®}, DeviceNet^{®}, or any other industrial communication network protocol. Alternatively, the communication component may enable the devices 56 to communicate via various wired or wireless communication protocols, such as Wi-Fi, mobile telecommunications technology (e.g., 2G, 3G, 4G, 5G, LTE), Bluetooth^{®}, near-field communications technology, and the like. In particular, the communication component may enable the devices 56 to communicate with the HIM 80 via Ethernet protocol and/or the Ethernet switch 58. The Ethernet switch 58 may route communications to and from the HIM 80 and the drives 54.

The sensors 16 may be any number of devices adapted to provide information regarding process conditions. The actuators 60 may include any number of devices adapted to perform a mechanical action in response to a signal from the drive 54 or a controller (e.g., based on an input provided by the HIM 80). The sensors 16 and actuators 60 may be utilized to operate the devices 56. Indeed, they may be utilized within process loops that are monitored and controlled by the drives 54. Such a process loop may be activated based on process inputs (e.g., input from a sensor 16) or direct operator input via the HIM 80. As illustrated, the sensors 16 and actuators 60 are in communication with the drives 54. Further, the sensors 16 and actuators 60 may be assigned a particular address in the drives 54 and receive power from a control/monitoring device or attached modules.

Input/output (I/O) modules 62 may be added or removed from the drives 54 via expansion slots, bays or other suitable mechanisms. In certain embodiments, the I/O modules 62 may be included to add functionality to the Ethernet switch 58 and/or the HIM 80, or to accommodate additional process features. For instance, the I/O modules 62 may communicate with new sensors 16 or actuators 60 added to monitor and control the devices 56. It should be noted that the I/O modules 62 may communicate directly to sensors 16 or actuators 60 through hardwired connections, such as an Ethernet connection, or may communicate through wired or wireless sensor networks, such as Hart or IOLink.

Generally, the I/O modules 62 serve as an electrical interface to the devices 56 and may be located proximate or remote from drives 54, including remote network interfaces to associated systems. In such embodiments, data may be communicated with remote modules over a common communication link, or network, wherein modules on the network communicate via a standard communications protocol. Many industrial controllers can communicate via network technologies such as Ethernet (e.g., IEEE802.3, TCP/IP, UDP, EtherNet/IP, and so forth), ControlNet, DeviceNet or other network protocols (Foundation Fieldbus (H1 and Fast Ethernet) Modbus TCP, Profibus) and also communicate to higher level computing systems.

In the illustrated embodiment, several of the I/O modules 62 may transfer input and output signals between the drives 54 and the devices 56. As illustrated, the sensors 16 and actuators 60 may communicate with the drives 54 via one or more of the I/O modules 62 coupled to the drives 54. Additionally, the drives 54 may route communications to and from the sensors 16 and the actuators 60 and the HIM 80 via the ethernet switch 58. The HIM 80 may be communicatively coupled to the Ethernet switch 58 via a wired connection managed by Ethernet protocol, for example, and the Ethernet switch 58 may direct communications from the HIM 80 to drives 54, such that the drives 54 may control the devices 56 based on inputs received via the ethernet switch 58. As such, the Ethernet switch 58 may allow each of the drives 54 to be connected in parallel with the HIM 80.

In certain embodiments, the control/monitoring system 50 (e.g., the HIM 80, the Ethernet switch 58, the sensors 16, the actuators 60, the I/O modules 62), the devices 56, and any other components may be arranged in, on, or around a storage module 64, such as a cabinet, cupboard, rack, or the like. The storage module 64 may contain the components suitable for interfacing with any type of industrial process or system used to manufacture, produce, process, or package various types of items. For example, the storage module 64 may include the drives 54, the ethernet switch 58, and/or the HIM 80. Components within the storage module 64 may communicate with the devices 56 which, as described herein, may include devices for material handling, packaging industries, manufacturing, processing, batch processing, the example industrial automation system 10 of FIG. 1, and so on. The storage module 64 may allow an operator of an industrial automation system to access components of the control/monitoring system 50 for inspection, maintenance, and the like.

In certain embodiments, the HIM 80 may be communicatively coupled to a mobile computing device 66 and a cloud-based computing system 68 via wireless network. For example, the HIM 80 may be communicatively coupled to the mobile computing device 66 via wireless Bluetooth, NFC, and the like, and may be communicatively coupled to the cloud-based computing system 68 via a wide-area network (WAN). In this network, input and output signals received at the HIM 80 may be communicated between the mobile computing device 66 and the cloud-based computing system 68. Additionally, certain instructions related to control and/or monitoring of the drives 54 and the devices 56, such as instructions related to deployment of containerized applications, may be sent from the cloud-based computing system 68 and/or the mobile computing device to the HIM 80. Although the HIM 80 may be capable of communicating with the mobile computing device 66 and the cloud-based computing system 68, as mentioned above, in certain embodiments, the HIM 80 may perform certain operations and analysis without sending data to the mobile computing device 66 or the cloud-based computing system 68. Further, in some embodiments, the HIM 80 may be communicatively connected to the cloud-based computing system 68 via an edge device such as a router device, an edge node, a firewall, or the like that may facilitate communication between local and cloud-based networks.

As illustrated in FIG. 3, the HIM 80 may be communicatively coupled to one or more drives 70, 72, 74, and 76 via the Ethernet switch 58. The first drive 70, the second drive 72, the third drive 74, and the fourth drive 76 may monitor and/or control one or more devices, for example, the mixer 18, the depositor 22, the conveyor 24, or the oven 26 of FIG. 1, or other suitable pieces of machinery. The HIM 80 and/or the Ethernet switch 58 may be situated on or around a storage module (e.g., the storage module 64 of FIG. 2) such that it may be easily accessed by an operator, and the drives 70, 72, 74, and 76 may be placed within the storage module 64 for protection (e.g., from access by unauthorized individuals, environmental conditions, etc.) or other purposes. The storage module 64 may protect from debris interfering with operation of the drives, for instance.

As discussed herein, the Ethernet switch 58 may route control instructions and so forth from the HIM 80 to the drives 70, 72, 74, and 76, and may route process data and the like from the drives 70, 72, 74, and 76 to the HIM 80. For example, the HIM 80 may send a signal indicative of instructions for the first drive 70 to perform a control function (e.g., to control a device 56) along with, in some embodiments, an identification of the first drive 70 as the intended recipient of the signal. The Ethernet switch 58 may then route the signal to the first drive 70 via a corresponding port of the Ethernet switch 58 over a local Ethernet connection (e.g., wired Ethernet connection).

Additionally, the Ethernet switch 58 may receive signals from the drives 70, 72, 74, and 76 via, for example, the I/O ports 62, and may route the signals to the HIM 80. The Ethernet switch 58 may be able to receive and route multiple signals simultaneously, enabling the HIM 80 to receive signals from each of the drives 70, 72, 74, and 76 concurrently. This may allow an operator to monitor one or more of the drives 70, 72, 74, and 76 at once, which may be advantageous, for example, in an interconnected system in which the real-time behavior of one drive may cause a response in another drive. Additionally or alternatively, signals received from the drives 70, 72, 74, and 76 may be used to monitor connected devices (e.g., the devices 56).

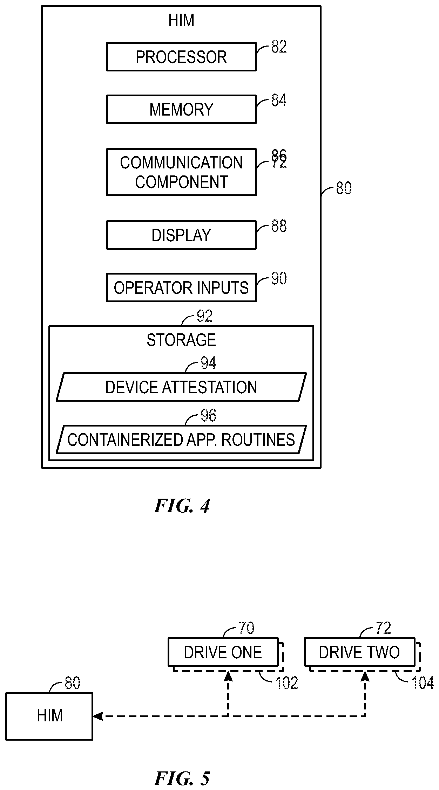

With the foregoing in mind, FIG. 4 illustrates example components of the HIM 80 as described herein. For example, the HIM 80 may include a processor 82, a memory 84, a communication component 86, a display 88, inputs 90, a storage 92, and the like. The processor 82 may be any type of computer processor or microprocessor capable of executing computer-executable code. The processor 82 may also encompass processing circuitry that includes multiple processors and/or multiple processing cores that may perform the operations described below in a distributed fashion. The memory 84 and the storage 92 may be any suitable articles of manufacture that can serve as media to store processor-executable code, data, or the like. These articles of manufacture may represent computer-readable media (e.g., any suitable form of memory or storage) that may store the processor-executable code used by the processor 82 to perform the presently disclosed techniques. Generally, the processor 82 may execute software applications that include programs that may monitor devices of an industrial automation system, receive signals (e.g., instructions) from a cloud-based computing system or a mobile computing device, instruct devices of the industrial automation system to perform control functions, and so on. Additionally, as will be described in detail below, the processor 82 may execute software applications that include device attestation routines 94 and containerized applications 96.

The communication component 86 may be a wireless or wired communication component that may facilitate communication between, for example, an ethernet switch, devices of an industrial automation system (e.g., via the ethernet switch), a mobile computing device, a cloud-based computing system, and other communication capable devices. The communication component may include circuitry for wireless communication via wide-area network (WAN), Bluetooth, NFC, and the like, and may also include circuitry for wired communication, such as Ethernet and the like.

The display 88 may depict visualizations associated with software or executable code being processed by the processor 82, and may be integral to the HIM 80. That is, the display 88 may be connected as part of the HIM 80. In one embodiment, the display 88 may be a touch display capable of receiving inputs (e.g., instructions to control the one or more drives 70, 72, 74, and 76) from a user of the HIM 80. As such, the display 88 may serve as a user interface to communicate with the one or more drives. The display 88 may be used to display a graphical user interface (GUI) for operating the one or more drives, for tracking the sensor data of the one or more drives, and the like. Additionally, GUI may facilitate user interfacing for authenticating and/or connecting to a mobile computing device (e.g., the mobile computing device 66) and/or cloud-based computing system, as described herein. The display 88 may be any suitable type of display, such as a liquid crystal display (LCD), plasma display, or an organic light emitting diode (OLED) display, for example. Additionally, in one embodiment, the display 88 may be provided in conjunction with a touch-sensitive mechanism (e.g., a touch screen) that may function as part of a control interface for the industrial automation system or for a number of devices of the industrial automation system.

The storage 92 may include a non-transitory computer readable media, such as, but not limited to, a hard disk device, a solid-state disk device, a flash memory device. The storage 92 may include one or more processor-executable device attestation routines 94 for authenticating drives of an industrial automation system, mobile computing devices (e.g., the mobile computing device 66), cloud-based computing systems (e.g., the cloud-based computing system 68), and the like. In one embodiment, the attestation routines 94, when executed by the processor 82, may cause the processor 82 to generate cryptographic keys (e.g., public and private keys) and exchange the keys with drives of an industrial automation system to verify software and/or hardware of the drives. In some cases, the device attestation routines 94 may include a trusted platform module (TPM) that may create a hash key summary of the hardware and software configurations of a drive of an industrial automation system, and the HIM 80 may use the hash key to authenticate the drive and/or verify that the hardware and software configurations of the drive have not been altered (e.g., tampered with). Additionally or alternatively, the device attestation routines 94 may include a secure boot process in which a signature associated with software (e.g., firmware) of a connected drive is verified during a startup process of the drive. In any case, the processor 82 may execute the device attestation routines 94 to verify the software and/or hardware of connected drives in response to, for example, instructions received from a trusted cloud-based computing system. Further, the device attestation routines 94 may be executed similarly to authenticate a mobile computing device or cloud-based computing system in response to a connection attempt from the mobile computing device or cloud-based computing system.

In some embodiments, aspects of the device attestation routines 94 may be altered via the cloud-based computing system 68. For example, a user of the cloud-based computing system 68 may remotely change security configurations of users, communication permits between devices, and the like. In one example, a user of the cloud-based computing system 68 may change a configuration of the HIM 80 such that control functions of the HIM 80 are disabled and monitoring functions of the HIM 80 remain enabled. As such, instructions related to control functions received from the mobile computing device 66, the operator inputs 90, or other means may be blocked (e.g., in a "read-only" mode). In another example, a user of the cloud-based computing system 68 may change the control configuration of the HIM 80 such that instructions to pause operation of one or more drives 54 and/or devices 56 may be communicated via the HIM 80 but all other control functions may be blocked (e.g., in a "stop-only" safety mode). Further, the cloud-based computing system 68 may alter the technique by which devices connected to the HIM 80 may be authenticated. For example, the cloud-based computing system may instruct the HIM 80 to authenticate certain drives 54 using certain hash summaries, cryptographic keys, and so on.

The storage 92 may also include one or more processor-executable containerized application routines 96. Each containerized application routine 96 may include, for example, libraries, configuration files, routines, frameworks, binaries, and the like associated with a function of an industrial automation system. The storage 92 may include, for example, containerized applications 96 for data analysis, maintenance, asset management, and monitoring of one or more drives of the industrial automation system. As will be described in more detail below, the containerized application routines 96 may include routines for coordinating operations for one or more OT devices (e.g., drives) via a control system. The HIM 80 may receive and/or implement requested operations for the OT devices from a container orchestration system implemented by, for example, a cloud-based computing system (e.g., the cloud-based computing system 68). In some embodiments, the processor 82, upon execution of the containerized application routines, may perform certain operations that may be mapped to certain container events for the OT devices.

As illustrated in FIG. 5, the HIM 80 may facilitate representing components of the industrial automation system 10 through programming objects, also referred to herein as "digital twins", that may be instantiated and executed to provide simulated functionality similar or identical to the actual components, as well as visualization of the components, or both, on the display 88. As illustrated, a first digital twin 102 may provide simulated functionality for the first drive 70, and a second digital twin 104 may provide simulated functionality for the second drive 72. The programming objects may include code and/or instructions stored in the storage 92 and/or memory 84 of the HIM 80 and executed by the processor 82 of the HIM 80. As will be described in more detail below, in some embodiments, the digital twins may run in one or more containers. The processor 82 may communicate with the memory 84 to permit the storage of the component visualizations, and the display 88 may be configured to depict representations of the components of the industrial automation system 10. The HIM 80 may use data transmitted by the first drive 70 and the second drive 72 to update visualizations of the components via changing one or more statuses, states, and/or indications of current operations of the components. Indeed, the first drive 70 and the second drive 72 may be used in a process loop (e.g., control loop) that may be monitored and controlled by, for example, the control and monitoring system 50 of FIG. 2. As such, a process loop may be activated based on process inputs (e.g., an input from the cloud-based computing system 68 or the mobile computing device 66) or direct input from a person via the display 88. The person operating and/or monitoring the industrial automation system 10 may reference the display 88 to determine various statuses, states, and/or current operations of the industrial automation system 10 and/or for a particular component. Furthermore, the person operating and/or monitoring the industrial automation system 10 may adjust to various components to start, stop, power-down, power-on, or otherwise adjust an operation of one or more components of the industrial automation system 10 through interactions with control panels or various input devices.

The industrial automation system 10 may be considered a data-rich environment with several processes and operations that each respectively generate a variety of data. For example, the industrial automation system 10 may be associated with material data (e.g., data corresponding to substrate or raw material properties or characteristics), parametric data (e.g., data corresponding to machine and/or station performance, such as during operation of the industrial automation system 10), test results data (e.g., data corresponding to various quality control tests performed on a final or intermediate product of the industrial automation system 10), or the like, that may be organized and sorted as OT data. In addition, sensors 16may gather OT data indicative of one or more operations of the industrial automation system 10 or the control and monitoring system 50. In this way, the OT data may be analog data or digital data indicative of measurements, statuses, alarms, or the like associated with operation of the industrial automation system 10 or the control and monitoring system 50.

The industrial automation system 10 described above may operate in an OT space in which OT data is used to monitor and control OT assets such as the industrial automation devices 20 of the industrial automation system 10 or other industrial equipment. The OT space, environment, or network generally includes direct monitoring and control operations that are coordinated by the control and monitoring system 50 and a corresponding OT asset. For example, a programmable logic controller (PLC) may operate in the OT network to control operations of an OT asset (e.g., drive, motor, and/or high-level controllers). The industrial control systems 21 may be specifically programmed or configured to communicate directly with the respective OT assets.

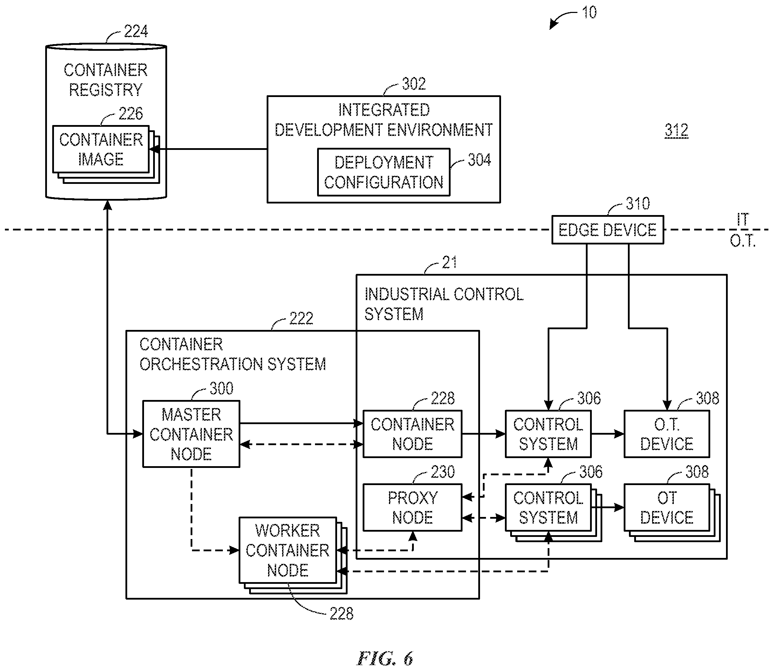

FIG. 6 illustrates a block diagram that depicts the relative positions of a container node 228 and a proxy node 230 with respect to a container orchestration system 222. The container orchestration system 222 may operate in an information technology (IT) environment. That is, the container orchestration system 222 may include a cluster of multiple computing devices, which may include cloud-based computing systems (e.g., the cloud-based computing system 68) that coordinates an automatic process of managing or scheduling work of individual containers for applications within the computing devices of the cluster. In other words, the container orchestration system 222 may be used to automate various tasks at scale across multiple computing devices. By way of example, the container orchestration system 222 may automate tasks such as configuring and scheduling deployment of containers, provisioning and deploying containers, determining availability of containers, configuring applications in terms of the containers that they run in, scaling of containers to equally balance application workloads across an infrastructure, allocating resources between containers, performing load balancing, traffic routing, and service discovery of containers, performing health monitoring of containers, securing the interactions between containers, and the like. In any case, the container orchestration system 222 may use configuration files to determine a network protocol to facilitate communication between containers, a storage location to save logs, and the like. The container orchestration system 222 may also schedule deployment of containers into clusters and identify a host (e.g., node) that may be best suited for executing the container. After the host is identified, the container orchestration system 222 may manage the lifecycle of the container based on predetermined specifications.

With the foregoing in mind, it should be noted that containers refer to technology for packaging an application along with its runtime dependencies. That is, containers include applications that are decoupled from an underlying host infrastructure (e.g., operating system). By including the run time dependencies with the container, the container may perform in the same manner regardless of the host in which it is operating. In some embodiments, containers may be stored in a container registry 224 as container images 226. The container registry 224 may be any suitable data storage or database that may be accessible to the container orchestration system 222. The container image 226 may correspond to an executable software package that includes the tools and data employed to execute a respective application. That is, the container image 226 may include related code for operating the application, application libraries, system libraries, runtime tools, default values for various settings, and the like.

By way of example, an integrated development environment (IDE) tool may be employed by a user to create a deployment configuration file that specifies a desired state for the collection of nodes of the container orchestration system 222. The deployment configuration file may be stored in the container registry 224 along with the respective container images 226 associated with the deployment configuration file. The deployment configuration file may include a list of different pods and a number of replicas for each pod that should be operating within the container orchestration system 222 at any given time. Each pod may correspond to a logical unit of an application, which may be associated with one or more containers. The container orchestration system 222 may coordinate the distribution and execution of the pods listed in the deployment configuration file, such that the desired state is continuously met. In some embodiments, the container orchestration system 222 may include a master node that retrieves the deployment configuration files from the container registry 224, schedules the deployment of pods to the connected nodes, and ensures that the desired state specified in the deployment configuration file is met. For instance, if a pod stops operating on one node, the master node may receive a notification from the respective worker node that is no longer executing the pod and deploy the pod to another worker node to ensure that the desired state is present across the cluster of nodes.

As mentioned above, the container orchestration system 222 may include a cluster of computing devices, computing systems, or container nodes that may work together to achieve certain specifications or states, as designated in the respective container. In some embodiments, container nodes 228 may be integrated within industrial control systems 21 (e.g., the control and monitoring system 50),. That is, container nodes 228 may be implemented by the industrial control systems 21, such that they appear as worker nodes to the master node in the container orchestration system 222. In this way, the master node of the container orchestration system 222 may send commands to the container nodes 228 that are also configured to perform applications and operations for the respective industrial equipment.

With this in mind, the container nodes 228 may be integrated with the industrial control systems 21, such that they serve as passive-indirect participants, passive-direct participants, or active participants of the container orchestration system 222. As passive-indirect participants, the container nodes 228 may respond to a subset of all of the commands that may be issued by the container orchestration system 222. In this way, the container nodes 228 may support limited container lifecycle features, such as receiving pods, executing the pods, updating a respective filesystem to included software packages for execution by the industrial control system 21, and reporting the status of the pods to the master node of the container orchestration system 222. The limited features implementable by the container nodes 228 that operate in the passive-indirect mode may be limited to commands that the respective industrial control system 21 may implement using native commands that map directly to the commands received by the master node of the container orchestration system 222. Moreover, the container node 228 operating in the passive-indirect mode of operation may not be capable to push the packages or directly control the operation of the industrial control system 21 to execute the package. Instead, the industrial control system 21 may periodically check the file system of the container node 228 and retrieve the new package at that time for execution.

As passive-direct participants, the container nodes 228 may operate as a node that is part of the cluster of nodes for the container orchestration system 222. As such, the container node 228 may support the full container lifecycle features. That is, container node 228 operating in the passive-direct mode may unpack a container image and push the resultant package to the industrial control system 21, such that the industrial control system 21 executes the package in response to receiving it from the container node 228. As such, the container orchestration system 222 may have access to a worker node that may directly implement commands received from the master node onto the industrial control system 21.

In the active participant mode, the container node 228 may include a computing module or system that hosts an operating system (e.g., Linux) that may continuously operate a container host daemon that may participate in the management of container operations. As such, the active participant container node 228 may perform any operations that the master node of the container orchestration system 222 may perform. By including a container node 228 operating in the OT space, the container orchestration system 222 is capable of extending its management operations into the OT space. That is, the container node 228 may provision devices in the OT space, serve as a proxy node 230 to provide bi-directional coordination between the IT space and the OT space, and the like. For instance, the container node 228 operating as the proxy node 230 may intercept orchestration commands and cause industrial control system 21 to implement appropriate machine control routines based on the commands. The industrial control system 21 may confirm the machine state to the proxy node 230, which may then reply to the master node of the container orchestration system 222 on behalf of the industrial control system 21.

Additionally, the industrial control system 21 may share an OT device tree via the proxy node 230. As such, the proxy node 230 may provide the master node with state data, address data, descriptive metadata, versioning data, certificate data, key information, and other relevant parameters concerning the industrial control system 21. Moreover, the proxy node 230 may issue requests targeted to other industrial control systems 21 to control other OT devices. For instance, the proxy node 230 may translate and forward commands to a target OT device using one or more OT communication protocols, may translate and receive replies from the OT devices, and the like. As such, the proxy node 230 may perform health checks, provide configuration updates, send firmware patches, execute key refreshes, and other OT operations for other OT devices.

As mentioned above, the container orchestration system 222 may include a collection of nodes that are used to achieve a desired state of one or more containers across multiple nodes. As shown in FIG. 6, the container orchestration system 222 may include a master node 300 that may execute control plane processes for the container orchestration system 222. The control plane processes may include the processes that enable the container orchestration system 222 to coordinate operations of the container nodes 228 to meet the desired states. As such, the master container node 300 may execute an applications programming interface (API) for the container orchestration system 222, a scheduler component, core resource controllers, and the like. By way of example, the master container node 300 may coordinate all of the interactions between nodes of the cluster that make up the container orchestration system 222. Indeed, the master container node 300 may be responsible for deciding the operations that will run on container nodes 228 including scheduling workloads (e.g., containerized applications), managing the workloads' lifecycle, scaling, and upgrades, managing network and storage resources for the workloads, and the like. The master container node 300 may run an API server to handle requests and status updates received from the container nodes 228.

By way of operation, an IDE tool 302 may be used by an operator to develop a deployment configuration file 304. As mentioned above, the deployment configuration file 304 may include details regarding the containers, the pods, constraints for operating the containers/pods, and other information that describe a desired state of the containers specified in the deployment configuration file 304. In some embodiments, the deployment configuration file 304 may be generated in a YAML file, a JSON file, or other suitable file format that is compatible with the container orchestration system 222. After the IDE tool 302 generates the deployment configuration file 304, the IDE tool 302 may transmit the deployment configuration file 304 to the container registry 224, which may store the file along with container images 226 representative of the containers stored in the deployment configuration file 304.

In some embodiments, the master container node 300 may receive the deployment configuration file 304 via the container registry 224, directly from the IDE tool 302, or the like. The master container node 300 may use the deployment configuration file 304 to determine a location to gather the container images 226, determine communication protocols to use to establish networking between container nodes 228, determine locations for mounting storage volumes, locations to store logs for the containers, and the like.

Based on the desired state provided in the deployment configuration file 304, the master container node 300 may deploy containers to the container host nodes 228. That is, the master container node 300 may schedule the deployment of a container based on constraints (e.g., CPU or memory availability) provided in the deployment configuration file 304. After the containers are operating on the container nodes 228, the master container node 300 may manage the lifecycle of the containers to ensure that the containers specified by the deployment configuration file 304 are operating according to the specified constraints and the desired state.

Keeping the foregoing in mind, the industrial control system 21 may not use an operating system (OS) that is compatible with the container orchestration system 222. That is, the container orchestration system 222 may be configured to operate in the IT space that involves the flow of digital information. In contrast, the industrial control system 21 may operate in the OT space that involves managing the operation of physical processes and the machinery used to perform those processes. For example, the OT space may involve communications that are formatted according to OT communication protocols, such as FactoryTalk LiveData, EtherNet/IP, Common Industrial Protocol (CIP), OPC Direct Access (e.g., machine to machine communication protocol for industrial automation developed by the OPC Foundation), OPC Unified Architecture (OPCUA), or any suitable OT communication protocol (e.g. DNP3, Modbus, Profibus, LonWorks, DALI, BACnet, KNX, EnOcean). Because the industrial control systems 21 operate in the OT space, the industrial control systems may not be capable of implementing commands received via the container orchestration system 222.

In certain embodiments, the container node 228 may be programmed or implemented in the industrial control system 21 to serve as a node agent that can register the industrial control system 21 with the master container node 300. The node agent may or may not be the same as the proxy node 230. For example, the industrial control system 21 may include a PLC that cannot support an operating system (e.g., Linux) for receiving and/or implementing requested operations issued by the container orchestration system 222. However, the PLC may perform certain operations that may be mapped to certain container events. As such, the container node 228 may include software and/or hardware components that may map certain events or commands received from the master container node 300 into actions that may be performed by the PLC. After converting the received command into a command interpretable by the PLC, the container node 228 may forward the mapped command to the PLC that may implement the mapped command. As such, the container node 228 may operate as part of the cluster of nodes that make up the container orchestration system 222, while a first control system 306 (e.g., PLC) that coordinates the OT operations for a second OT device 308 in an industrial control system. The first control system 306 may include a controller, such as a PLC, an HLC, a programmable automation controller (PAC), or any other controller that may monitor, control, and operate an industrial automation device or component. In particular, the first control system 306 may be part of, or implemented by, the HIM 80.

The OT device 308 may correspond to an industrial automation device or component. The OT device 308 may include any suitable industrial device that operates in the OT space. As such, the OT device 308 may be involved in adjusting physical processes being implemented via the industrial automation system 10. In some embodiments, the OT device 308 may include motor control centers, motors, HMIs, operator interfaces, contactors, starters, sensors, drives, relays, protection devices, switchgear, compressors, network switches (e.g., Ethernet switches, modular-managed, fixed-managed, service-router, industrial, unmanaged, etc.) and the like. In addition, the OT device 308 may also be related to various industrial equipment such as mixers, machine conveyors, tanks, skids, specialized original equipment manufacturer machines, and the like. The OT device 308 may also be associated with devices used by the equipment such as scanners, gauges, valves, flow meters, and the like.

In the present embodiments described herein, the control system 306 may thus perform actions based on commands received from the container node 228. By mapping certain container lifecycle states into appropriate corresponding actions implementable by the control system 306, the container node 228 enables program content for the industrial control system 21 to be containerized, published to certain registries, and deployed using the master container node 300, thereby bridging the gap between the IT-based container orchestration system 222 and the OT-based industrial control system 21.

In some embodiments, the container node 228 may operate in an active mode, such that the container node may invoke container orchestration commands for other container nodes 228. For example, a proxy node 230 may operate as a proxy or gateway node that is part of the container orchestration system 222. The proxy node 230 may be implemented in a sidecar computing module that has an operating system (OS) that supports the container host daemon. In another embodiment, the proxy node 230 may be implemented directly on a core of the control system 306 that is configured (e.g., partitioned), such that the control system 306 may operate using an operating system that allows the container node 228 to execute orchestration commands and serve as part of the container orchestration system 222. In either case, the proxy node 230 may serve as a bi-directional bridge for IT/OT orchestration that enables automation functions to be performed in IT devices based on OT data and in OT devices 308 based on IT data. For instance, the proxy node 230 may acquire OT device tree data, state data for an OT device, descriptive metadata associated with corresponding OT data, versioning data for OT devices 308, certificate/key data for the OT device, and other relevant OT data via OT communication protocols. The proxy node 230 may then translate the OT data into IT data that may be formatted to enable the master container node 300 to extract relevant data (e.g., machine state data) to perform analysis operations and to ensure that the container orchestration system 222 and the connected control systems 306 are operating at the desired state. Based on the results of its scheduling operations, the master container node 300 may issue supervisory control commands to targeted OT devices via the proxy nodes 230, which may translate and forward the translated commands to the respective control system 306 via the appropriate OT communication protocol.

In addition, the proxy node 230 may also perform certain supervisory operations based on its analysis of the machine state data of the respective control system 306. As a result of its analysis, the proxy node 230 may issue commands and/or pods to other nodes that are part of the container orchestration system 222. For example, the proxy node 230 may send instructions or pods to other worker container nodes 228 that may be part of the container orchestration system 222. The worker container nodes 228 may corresponds to other container nodes 228 that are communicatively coupled to other control systems 306 for controlling other OT devices 308. In this way, the proxy node 230 may translate or forward commands directly to other control systems 306 via certain OT communication protocols or indirectly via the other worker container nodes 228 associated with the other control systems 306. In addition, the proxy node 230 may receive replies from the control systems 306 via the OT communication protocol and translate the replies, such that the nodes in the container orchestration system 222 may interpret the replies. In this way, the container orchestration system 222 may effectively perform health checks, send configuration updates, provide firmware patches, execute key refreshes, and provide other services to OT devices 308 in a coordinated fashion. That is, the proxy node 230 may enable the container orchestration system to coordinate the activities of multiple control systems 306 to achieve a collection of desired machine states for the connected OT devices 308.

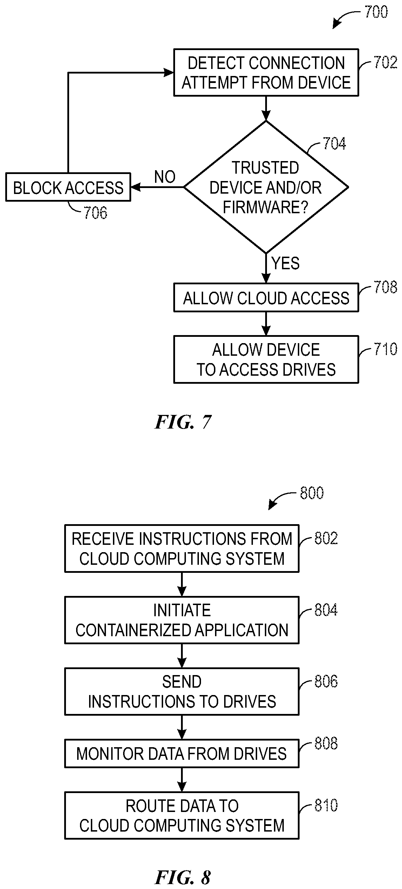

FIG. 7 illustrates a flow chart of a method 700 for allowing access between devices of an industrial automation system, such as the drives 54, the devices 56, the HIM 80, the cloud-based computing system 68, and the mobile computing device 66 of FIG. 2. In block 702, the HIM 80 may detect an access attempt from a connected device, such as the mobile computing device 66. The access attempt may be indicative of a user of the mobile computing device 66 attempting to access, for example, the drives 54 for remote control and/or monitoring of the drives 54 via the HIM 80. The access attempt may be indicated by an NFC connection request, a Bluetooth connection request, or the like, and may include information such as an indication of a recipient device, device information of the mobile computing device 66, user credentials of the user of the mobile computing device 66, or other information useful in assessing whether the mobile computing device 66 is a trusted device. As may be appreciated, access attempts from other devices, such as the cloud-based computing system 68, may be indicated by other connection requests (e.g., via WAN), and/or may include different information for assessing whether the device is a trusted device.

In block 704, the HIM 80 may authenticate a device from which an access attempt originated (e.g., a requesting device) and may authenticate hardware, firmware, and/or software aspects of a device (e.g., a recipient device). As such, the HIM 80 may determine whether the requesting device is a trusted device. In some cases, the access attempt may include an indication of a recipient device (e.g., drive) and as such, the HIM 80 may also determine whether the recipient device is a trusted device. For example, the HIM 80 may determine whether firmware of the recipient device has been tampered with. As described herein, the HIM 80 may execute device attestation routines (e.g., the device attestation routines 94) to authenticate one or more devices and/or allow communication between the one or more devices.

For example, if the HIM 80 detects that the mobile computing device 66 is attempting to access the first drive 70 via the HIM 80, the processor 82 of the HIM 80 may generate and exchange one or more cryptographic keys with the mobile computing device 66 to authenticate the mobile computing device 66, and may use a hash key summary to authenticate the first drive 70. Additionally or alternatively, the HIM 80 may use a trusted platform module (TPM), digital certificates, or other suitable authentication techniques to verify connected devices and allow access between the devices via the HIM 80. Further, as described herein, certain security configuration of the HIM 80 may be altered via the cloud-based computing system 68. As such, authentication of the devices in block 704 may be based on configuration changes instructed by the cloud-based computing system 68. Moving on, if the requesting device is not authenticated, in block 706, communication between the requesting device and the HIM 80 may be blocked. Additionally, if the requesting device and/or the recipient device are not authenticated, communications between the requesting device and the recipient device may be blocked.

In some cases, an access attempt may originate from a cloud-based computing system or may be received via a cloud-based computing system (e.g., from a mobile computing device). In such cases, if the requesting device is determined to be a trusted device, in block 708, the requesting device is permitted to access the HIM 80 via the cloud-based computing system. Additionally, if the requesting device is authenticated, in block 708, the requesting device is allowed access to the recipient devices. Access may include control permissions, monitoring permissions, and the like, and may be defined by, for example, configurations that may be altered by a cloud-based computing system connected to the HIM 80.

FIG. 8 is a flow chart of a process 800 for deploying containerized applications that may be executed by a HIM (e.g., the HIM 80). In block 802, the HIM may receive instructions to deploy a containerized application from a cloud-based computing system (e.g., the cloud-based computing system 68). As described herein, the cloud-based computing system may be part of a container orchestration system that includes a master container node that may execute control plane processes for the container orchestration system. The container orchestration system may also include container nodes that are configured to execute applications for industrial equipment, such as the drives 54, and the master container node may send instructions to the container nodes. For example, instructions received by the HIM from the cloud-based computing system may include commands sent from the master container node to the container nodes.

The commands received at the container nodes may, in block 804, cause the HIM to execute a containerized application. The containerized application may be coordinated by a control system (e.g., the control system 306), and the control system may thus perform actions based on commands received from the container node. The containerized application may include an application related to acquisition/collection of data related to one or more OT devices, analysis of data related to one or more OT devices (e.g., drives), an application related to maintenance of one or more OT devices, an application related to asset management of one or more devices, an application related to monitoring of one or more devices, an application related to identifying or diagnosing conditions, and application related to developing and/or implementing remedial actions, or applications related to installing firmware and/or software updated. The containerized application may also include an application related to processing local control functions of one or more devices or control systems, aggregating signals across a control system (e.g., by buffering high-speed signals from one or more devices), or another monitoring and/or control application of an industrial automation system.

As part of implementation of the containerized application, in block 806, the HIM may, via the control system, provide input to one or more OT devices. The input may be routed to one or more drives via an ethernet switch (e.g., the ethernet switch 58), and may include instructions related to, for example, a control function of one or more devices of the industrial automation system (e.g., the devices 56). As such, commands sent from the master container node to the container nodes may cause the HIM to provide an input to one or more OT devices. Thus, the HIM may facilitate control of the OT devices by the cloud-based computing systems.

Additionally, implementation of the containerized application may, in block 808, cause the HIM 80 to monitor process data associated with one or more OT devices. The HIM 80 may, for example, receive signals from sensors associated with various industrial equipment such as mixers, machine conveyors, tanks, skids, specialized original equipment manufacturer machines, and the like. The HIM 80 may also receive signals from devices used by the equipment such as scanners, gauges, valves, flow meters, and the like. The HIM 80 may monitor certain types of process data (e.g., data from certain devices) as specified by commands received by the container node 228 from the master container node 300 (e.g., instructions received at the HIM 80 sent by the cloud-based computing system 68). In block 810, process data associated with the OT devices and received at the HIM 80 may be routed to the cloud-based computing system. Additionally, process data routed to the cloud-based computing system may be displayed by a device connected to the cloud-based computing system, such as a mobile computing device.

The present patent application is directed to HIMs with improved connectivity and capabilities at the system and device level. A HIM may be connected in parallel to multiple peripheral devices (e.g., drives) locally via high-speed ethernet connection, and may act as an edge interface between the OT network and the cloud (e.g., to provide access to one or more cloud-based services). The HIM may be configured to locally manage and push firmware updates to devices on the network via the ethernet connection. Additionally, the HIM may include a compute surface capable of executing deployable containerized applications, including real-time data acquisition, analysis, maintenance, asset management, device attestation, and monitoring of/for multiple peripheral devices concurrently. In some embodiments, the compute surface of the HIM may be configured to run digital twins of devices on the network. The HIM may also be configured to provide peripheral device attestation (e.g., using cryptographic keys and digital certificates via a trusted platform module or secure boot process) to verify the authenticity of a device and/or its firmware, allowing cloud-based applications to use the HIM as a secure access point to peripheral devices. Further, the HIM may be configured to connect to a mobile device (e.g., via a Bluetooth or Near Field Communication (NFC) connection). Once connected to the mobile device, the HIM may be configured to use the mobile device as a tether to access the internet and/or the cloud. Further, once connected to the HIM, the mobile device may be able to access devices (e.g., drives) on the network.

While current edge computing systems may lack capabilities necessary for increasingly connected and complex industrial automation systems, the present disclosure provides improved systems and methods for edge computing and connectivity via a HIM. An improved system, as described herein, may allow monitoring and control of multiple industrial automation devices concurrently via parallel high-speed Ethernet connection to the HIM, which may improve response times for diagnosis and troubleshooting of an interconnected industrial automation system. Additionally, the improved system may provide a HIM that includes improved cloud connectivity, device attestation, digital twinning, and local computing capabilities, which may allow for remote control and monitoring, enhanced cybersecurity, and efficient device testing.

While the present disclosure may be susceptible to various modifications and alternative forms, specific embodiments have been shown by way of example in the drawings and have been described in detail herein. However, it should be understood that the present disclosure is not intended to be limited to the particular forms disclosed. Rather, the present disclosure is intended to cover all modifications, equivalents, and alternatives falling within the spirit and scope of the present disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A human-interface module (HIM) for an industrial automation system comprising:
processing circuitry; and
a memory, accessible by the processing circuitry, the memory storing instructions that, when executed by the processing circuitry, cause the processing circuitry to perform operations comprising:
receiving instructions to control one or more industrial automation devices of the industrial automation system via a cloud-based computing system or a mobile computing device communicatively coupled to the HIM;
generating one or more control signals based on the instructions;
transmitting the one or more control signals to the one or more industrial automation devices via an Ethernet connection;
receiving process data associated with the one or more industrial automation devices; and
transmitting the process data to the mobile computing device.

2. The HIM of claim 1, at least one of:
wherein the one or more industrial automation devices are communicatively coupled to the HIM in parallel via an Ethernet switch;
wherein the one or more control signals comprise instructions to implement a firmware update on the one or more industrial automation devices;
wherein receiving the process data from the one or more industrial automation devices comprises receiving first process data from a first industrial automation device and receiving second process data from a second industrial automation device concurrently via the Ethernet connection;
wherein transmitting the process data to the mobile computing device is via the cloud-based computing system; and
wherein the operations comprise:
generating a device twin for a device of the one or more devices, wherein the device twin comprises an interface by which one or more applications interact with the device.

3. The HIM of claim 1 or 2, wherein the operations comprise:
detecting a connection attempt from the mobile computing device via the cloud-based computing system;
determining whether the mobile computing device is a trusted device; and
allowing access from the mobile computing device to the one or more industrial automation devices in response to determining that the mobile computing device is a trusted device.

4. The HIM of claim 3, wherein the connection attempt comprises an indication of one or more recipient drives of the one or more industrial automation devices, and wherein the operations comprise:
determining permissions granted to the mobile computing device for the one or more recipient drives; and
generating the one or more control signals based on the permissions.

5. The HIM of claim 4, wherein the operations comprise:
receiving, from the cloud-based computing system, instructions to update the permissions granted to the mobile computing device for the one or more recipient drives; and
generating the one or more control signals based on the updated permissions.

6. The HIM of one of claims 1 to 5, wherein the instructions comprise instructions to execute one or more containerized applications on a compute surface of the HIM.

7. The HIM of claim 6, wherein the one or more containerized applications are associated with the control, monitoring, or authentication of the one or more industrial automation devices.

8. A method, comprising:
receiving, from a cloud-based computing system, via a human-interface module (HIM), instructions to control one or more industrial automation devices of a plurality of industrial automation devices of an industrial automation system;
generating, via the HIM, one or more control signals based on the instructions;
transmitting the one or more control signals from the HIM to the one or more industrial automation devices via an Ethernet connection;
receiving, via the HIM, process data associated with the one or more industrial automation devices; and
transmitting, via the HIM, the process data to the cloud-based computing system or a mobile computing device communicatively coupled to the HIM.

9. The method of claim 8, comprising:
detecting a connection attempt from the mobile computing device to a recipient device of the one or more industrial automation device via the cloud-based computing system;
determining whether the mobile computing device is authorized to access to the recipient device; and
communicatively coupling to the mobile computing device in response to determining that the mobile computing device is authorized to access the recipient device.

10. The method of claim 9, wherein determining whether the mobile computing device is authorized to access to the recipient device is based on an exchange of one or more cryptographic keys between the mobile computing device and the HIM.

11. The method of claim 9 or 10, wherein the instructions are received from a mobile computing device, and wherein the method comprises:
determining whether the recipient device is a trusted device based on inspection of a digital signature included in firmware of the recipient device; and
transmitting the one or more control signals to the recipient device based on the determination that the recipient device is a trusted device.

12. An industrial automation system, comprising:
a plurality of industrial automation devices;
an ethernet switch communicatively coupled to the plurality of industrial automation devices; and
a human-interface module (HIM) communicatively coupled to the plurality of devices, via the ethernet switch, and configured to:
receive instructions to control or monitor one or more industrial automation devices of the plurality of devices of the industrial automation system;
generate one or more control signals based on the instructions;
transmit the one or more control signals to the one or more industrial automation devices via the Ethernet switch;
receive, via the Ethernet switch, process data associated with the one or more industrial automation devices; and
transmit the process data to:
a cloud-based computing system communicatively coupled to the HIM;
a mobile computing device communicatively coupled to the HIM;
a containerized application executing in a container running on a compute surface of the HIM; or
a combination thereof.

13. The industrial automation system of claim 12, wherein the HIM is configured to:
receive, from the cloud-based computing system, the instructions to control or monitor the one or more industrial automation devices of the plurality of industrial automation devices of the automation system from the cloud-based computing system; and
transmit the process data to the cloud-based computing system.

14. The industrial automation system of claim 13, wherein the HIM is configured to:
receive, from the cloud-based computing system, additional instructions to change one or more security configurations of the HIM; and
generate the one or more control signals based on the changed one or more security configurations.

15. The industrial automation system of one of claims 12 to 14, at least one of:
wherein each industrial automation device of the one or more industrial automation devices is configured to perform a control function for one or more additional industrial automation devices based on the one or more control signals; and
wherein the HIM comprises a display, and wherein the HIM is configured to display the received process data via the display.
